**Europäisches Patentamt**

**European Patent Office**

**Office européen des brevets**

(19)

(11) Veröffentlichungsnummer: **0 082 940**
**B1**

(12) # EUROPÄISCHE PATENTSCHRIFT

(45) Veröffentlichungstag der Patentschrift:
08.03.89

(51) Int. Cl.⁴: **G 05 B 19/21**, G 05 B 23/02

(21) Anmeldenummer: **82110119.3**

(22) Anmeldetag: **03.11.82**

(54) Positionierverfahren für Maschinen.

(30) Priorität: **28.12.81 DE 3151579**

(43) Veröffentlichungstag der Anmeldung:
**06.07.83 Patentblatt 83/27**

(45) Bekanntmachung des Hinweises auf die Patenterteilung:
**08.03.89 Patentblatt 89/10**

(84) Benannte Vertragsstaaten:
**AT CH FR GB IT LI NL SE**

(56) Entgegenhaltungen:
**EP-A-0 063 466**
**FR-A-2 183 822**
**FR-A-2 424 576**
**US-A-3 941 987**
**US-A-4 130 787**

**W. Oppelt, "Kleines Handbuch technischer Regulungen", Verlag Chemie, Weinheim, 1972, S. 731-732**

(73) Patentinhaber: **Dr. Johannes Heidenhain GmbH, Nansenstrasse 17, D-8225 Traunreut (DE)**

(72) Erfinder: **Rauth, Michael, Ing. grad., Bayernstrasse 6, D-8225 Traunreut (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Positionieren von relativ zueinander verschiebbaren Maschinenteilen von numerisch gesteuerten Maschinen gemäß dem Oberbegriff des Anspruchs 1.

Aus der Literaturstelle "Kleines Handbuch technischer Regelvorgänge" von W. Oppelt (1972) Seiten 731 - 732 ist ein selbsteinstellender Regler bekannt, bei dem das wirkliche System und ein Modellsystem von demselben Stellsignal beaufschlagt werden. Aus den momentanen Lageistwerten des wirklichen Systems und des Modellsystems wird in einem Differenzglied ein Differenzwert als Maß für die Abweichung zwischen dem Modellsystem und dem wirklichen System gebildet, der auf das wirkliche System zur Selbsteinstellung zurückgeführt wird.

Die FR-A-2 424 576 beschreibt ein System zum Feststellen einer Fehlfunktion für eine numerische Regeleinheit, bei dem die Achsenbefehlswerte in einem Fehlerregister addiert und der Additionswert durch einen D/A-Umwandler in eine Analogspannung umgesetzt wird, die einem Servomotor zur Verschiebung eines Maschinenteils zugeführt wird. Diese Verschiebung des Maschinenteils wird von einem Impulskodierer ermittelt, dessen Rückkopplungsimpulse dem Fehlerregister zur schrittweisen Verringerung seines Wertes zugeleitet werden. Zu einer vorbestimmten Zeit wird ein Vergleich zwischen dem Wert des Fehlerregisters und einem voreingestellten Wert vorgenommen und ein Alarmsignal erzeugt, wenn der Wert des Fehlerregisters den voreingestellten Wert übersteigt.

In der deutschen Zeitschrift "ELEKTRONIK" 1980, Heft 18, Seiten 47 bis 54 ist ein Positionierungssystem mit einem Lageregelkreis zur Steuerung eines Motors für eine Last in Abhängigkeit von vorgegebenen Lagesollwerten und von durch einen Winkelgeber ermittelten Lageistwerten dieser Last beschrieben.

In einem solchen Lageregelkreis können aber Fehler auftreten, die ein Überfahren der durch den vorgegebenen Lagesollwert bestimmten Endposition zur Folge haben. Bei Bearbeitungsmaschinen kann ein derartiger Positionierfehler zu einer Gefährdung der Bedienungsperson und zu einer Beschädigung des zu bearbeitenden Werkstücks sowie der Maschine selbst führen.

Der Erfindung liegt die Aufgabe zugrunde, ein Verfahren zum Positionieren von Maschinenteilen einer Maschine anzugeben, die derartige Positionierfehler ausschließt.

Diese Aufgabe wird erfindungsmäßig durch die kennzeichnenden Merkmale des Anspruchs 1 gelöst.

Die mit der Erfindung erzielten Vorteile bestehen insbesondere darin, daß mit den vorgeschlagenen Maßnahmen die wesentlichen Komponenten des Lageregelkreises hinsichtlich ihrer ordnungsgemäßen Funktion überwacht werden, so daß die Betriebssicherheit weiter erhöht und die Unfallgefahr für die Bedienungsperson sowie die Ausschußrate an Werkstücken wesentlich gesenkt werden.

Weitere vorteilhafte Einzelheiten des Verfahrens entnimmt man den Unteransprüchen.

Im folgenden wird das vorgeschlagene Verfahren anhand der Zeichnung näher erläutert. Es zeigen

Figur 1    eine schematische Darstellung einer numerisch gesteuerten Drehmaschine und

Figur 2    ein Blockschaltbild der Komponenten der Positioniereinrichtung mit den Merkmalen der Erfindung.

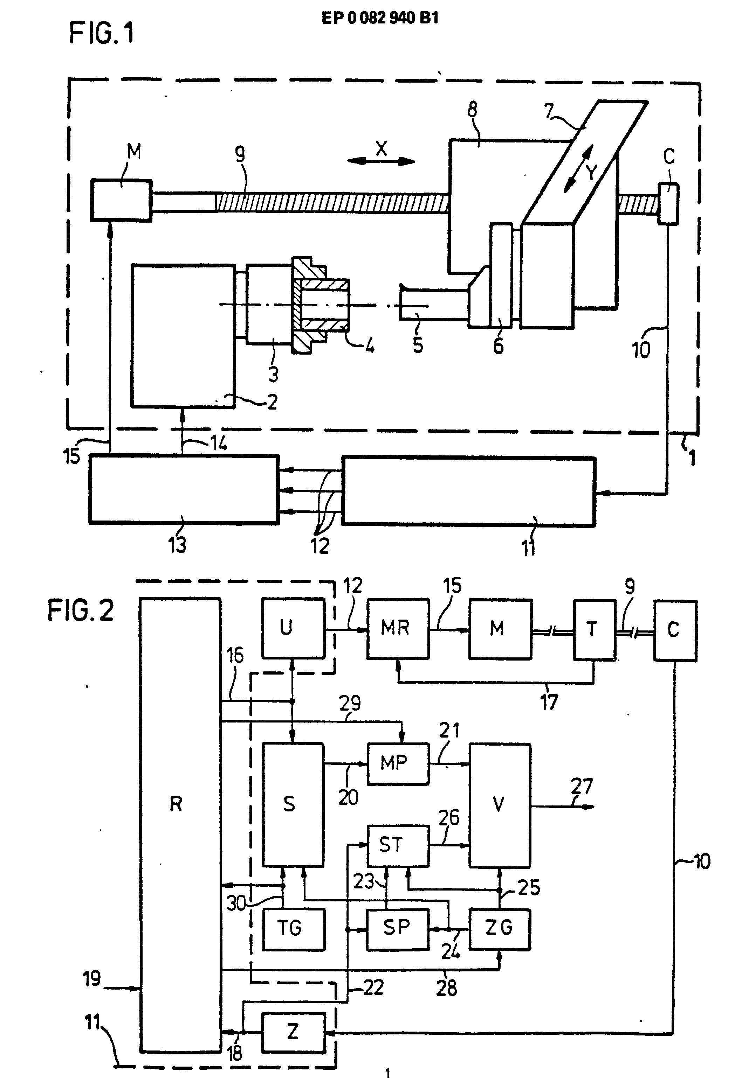

In Figur 1 ist in vereinfachter schematischer Darstellung eine numerisch gesteuerte Drehmaschine 1 gezeigt, die einen Spindelkasten 2 zum Antrieb eines drehbaren Futters 3 mit einem eingespannten, zu bearbeitenden Werkstück 4 aufweist. Ein Bearbeitungswerkzeug 5 ist mittels eines Werkzeughalters 6 über einen Querschlitten 7 für die Y-Richtung mit einem Längsschlitten 8 für die X-Richtung verbunden. Zur Positionierung des Werkzeugs 5 in der X-Richtung (die hier allein betrachtet werden soll) ist der Längsschlitten 8 in dieser Richtung mittels einer Spindel 9 verschiebbar, die von einem motor M angetrieben wird.

Die Lageistwerte der Schneidkante des Werkzeugs 5 bei der Verschiebung des Längsschlittens 8 werden von einer an der Spindel 9 befestigten Positionsmeßeinrichtung C ermittelt und über eine Leitung 10 einer numerischen Steuerung 11 zugeleitet, die zur Steuerung der Drehmaschine 1 nach einem vorgegebenen Programm über Analogausgänge 12 mit einer Maschinenanpaßsteuerung 13 verbunden ist, deren erster Analogausgang 14 den Spindelkasten 2 zur Regelung der Drehzahl des Futters 3 und deren zweiter Analogausgang 15 den Motor M zur Verschiebung des Lägsschlittens 8 beaufschlagen.

Gemäß Figur 2 ist zur Positionierung des Werkzeugs 5 in der X-Richtung ein geschlossener Lageregelkreis vorgesehen, bei dem ein Rechner R der numerischen Steuerung 11 über eine Leitung 16 einmal mit einem Digital/Analog-Umsetzer U verbunden ist, dessen Analogausgang 12 an den ersten Eingang eines Motorreglers MR in Form eines Sollwert/Istwert-Vergleichers für die Vorschubgeschwindigkeit des Schlittens 8 angeschlossen ist, der mit seinem Analogausgang 15 den Motor M beaufschlagt. Mit dem Motor M sind einmal ein Tachogenerator T, dessen Ausgang über eine Leitung 17 mit dem zweiten Eingang des Motorregler MR verbunden ist, und zum anderen über die Spindel 9 die Positionsmeßeinrichtung C gekoppelt, deren Ausgangssignale über die Leitung 10 einem Zähler Z und als Lageistwerte des Werkzeugs 5 über eine Leitung 18 dem Rechner R zugeleitet werden; die durch Programmierung fest vorgegebenen Lagesollwerte werden dem Rechner R über eine Leitung 19 zugeführt.

Zur Erreichung eines fest vorgegebenen Lagesollwerts gibt der Rechner pro Zeiteinheit variable Lagesollwerte vor, bildet fortlaufend die Differenzwerte zwischen den variabel vorgegebenen Lagesollwerten und den momentanen Lageistwerten des Werkzeugs 5 und gibt jeweils diesen Differenzwerten entsprechende digitale Spannungswerte über die Leitung 16 an den Digital/Analog-Umsetzer U ab, an dessen Ausgang somit diesen Differenzwerten proportionale Analogspannungen zur Beeinflussung des Motorreglers MR anstehen.

Zur Überprüfung des Lageregelkreises werden diese Differenzwerte gleichzeitig über die Leitung 16 einem Summierer S zugeführt und der aufsummierte Differenzwert über eine Leitung 20 einem Multiplizierer MP zugeleitet, in dem der aufsummierte Differenzwert gegebenenfalls mit einem für die jeweilige Werkzeugmaschine spezifischen Faktor zur Anpassung multipliziert wird; sodann gelangt der korrigierte aufsummierte Differenzwert über eine Leitung 21 an einen Vergleicher V. Dieser spezifische Faktor stellt den Proportionalitätsfaktor zwischen der Analogspannung am Ausgang des Digital/Analog-Umsetzers U und der Verschiebegeschwindigkeit des Werkzeugs 5 dar.

Die Lageistwerte am Ausgang des Zählers Z liegen über eine Leitung 22 an einem Eingang eines Speichers SP und an einem Eingang eines Substrahierers ST an, der über eine Leitung 23 mit dem Speicher SP verbunden ist. Ein Zeitgeber ZG veranlaßt über eine Leitung 24 den Beginn der Summenbildung der Differenzwerte im Summierer S und die gleichzeitige Einspeicherung des momentanen Istwertes in den Speicher SP für einen Überprüfungszyklus. Am Ende dieses Überprüfungszyklus bewirkt der Zeitgeber ZG über eine Leitung 25 im Substrahierer ST die Differenzbildung zwischen dem auf der Leitung 22 anliegenden jetzigen Lageistwert und dem auf der Leitung 23 anliegenden anfänglichen Lageistwert aus dem Speicher SP; diese Differenz der Lageistwerte stellt die vom Werkzeug 5 zurückgelegte Strecke während der Summenbildung der Differenzwerte dar und wird über eine Leitung 26 dem Vergleicher V zugeführt. Der Vergleicher V vergleicht auf Veranlassung des Signals auf der Leitung 25 den zahlenmäßigen Betrag des korrigierten aufsummierten Differenzwertes mit dem zahlenmäßigen Betrag der während dieser Summenbildung zurückgelegten Strecke des Werkzeugs 5; bei Gleichheit beider Beträge liegt eine fehlerfreie Funktion des Lageregelkreises vor, während bei einer Abweichung von der Übereinstimmung zwischen den beiden Beträgen, vorzugsweise außerhalb eines bestimmten wählbaren Toleranzbereichs, vom Vergleicher U auf der Leitung 27 ein Fehlersignal ausgegeben wird.

Die variable Zeitdauer der Überprüfungszyklen mit jeweils erneuter Summenbildung wird vom Rechner R über eine Leitung 28 gesteuert und ist eine Funktion der Vorschubgeschwindigkeit des Werkzeugs 5. Der Rechner R beaufschlagt gleichfalls über eine Leitung 29 den Multiplizierer MP bezüglich des maschinenspezifischen Faktors. Ein Taktgeber TG synchronisiert über eine Leitung 30 den Rechner R und den Summierer S mit vorgegebener konstanter Taktfrequenz.

In einer anderen Ausbildung wird vorgeschlagen, die Aufsummierung der Differenzwerte und den Vergleich zwischen dem zahlenmäßigen Betrag der vom Werkzeug 5 zurückgelegten Strecke und dem zahlenmäßigen Betrag des aufsummierten Differenzwertes durch einen Rechner, insbesonders durch einen Mikroprozessor, vornehmen zu lassen, die ohnehin bei einer numerischen Steuerung vorhanden sind; bei einer Ungleichheit zwischen den beiden Beträgen außerhalb eines vorgebbaren Toleranzbereiches wird vom Rechner eine Fehlermeldung veranlaßt.

## Patentansprüche

1. Verfahren zum Positionieren von relativ zueinander verschiebbaren Maschinenteilen von numerisch gesteuerten Maschinen, insbesondere Bearbeitungsmaschinen, deren numerische Steuerung wenigstens einen geschlossenen Lageregelkreis zur Beeinflussung einer Antriebseinheit für ein verschiebbares Maschinenteil, in Abhängigkeit von fest vorgegebenen Lagesollwerten und von durch eine Positionsmeßeinrichtung ermittelten Lageistwerten für das Maschinenteil, beaufschlagt, indem die Steuerung die Differenzwerte zwischen den variabel vorgegebenen Lagesollwerten und den momentanen Lageistwerten ermittelt und jeweils diesen Differenzwerten proportionale Analogspannungen an einen Antriebsregler für die Antriebseinheit ausgibt, dadurch gekennzeichnet, daß zur Überprüfung des Lageregelkreises diese Differenzwerte gleichzeitig aufsummiert und gegebenenfalls mit einem maschinenspezifischen Faktor korrigiert werden, daß der zahlenmäßige Betrag der während dieser Summenbildung zurückgelegten Strecke des verschiebberen Maschinenteils (8) mit dem zahlenmäßigen Betrag des aufsummierten, gegebenenfalls korrigierten Differenwertes verglichen wird, daß bei einer Ungleichheit zwischen dem zahlenmäßigen Betrag der zurückgelegten Strecke und dem zahlenmäßigen Betrag des aufsummierten, gegebenenfalls korrigierten Differenzwertes eine Fehlermeldung ausgegeben wird und daß die Überprüfung des Lageregelkreises zyklisch mit jeweils erneuter Summenbildung in von der Geschwindigkeit des Maschinenteils (8) abhängigem Takt erfolgt.

2. Verfahren nach Anspruch 1, dadurch gekennzeichnet, daß die Aufsummierung der Differenzwerte und der Vergleich zwischen dem zahlenmäßigen Betrag der zurückgelegten Strecke und dem zahlenmäßigen Betrag des aufsummierten Differenzwertes durch einen Rechner erfolgen.

3. Verfahren nach Anspruch 1, dadurch gekennzeichnet, daß die Aufsummierung der Differenzwerte durch einen diskreten Summierer (S) und der Vergleich zwischen dem zahlenmäßigen Betrag der zurückgelegten Strecke und dem zahlenmäßigen Betrag des aufsummierten Differenzwertes durch einen diskreten Vergleicher (V) erfolgen.

4. Verfahren nach Anspruch 1, dadurch gekennzeichnet, daß bei einer Ungleichheit außerhalb eines vorgebbaren Toleranzbereichs eine Fehlermeldung ausgegeben wird.

## Claims

1. Method of positioning machine parts of numerically controlled machines displaceable relative to each other, especially material working machines, whose numerical control acts on at least one closed loop control circuit for controlling a drive unit for a displaceable machine part, in dependence upon fixed, predetermined position commanded values and position actual values for the machine part furnished by a position measuring device, in which the control forms the difference values between the variably provided position commanded values and the instantaneous position actual values and yields an analog voltage to a drive controller for the drive unit proportional to each of these difference values, characterized in that for checking the position control circuit these difference values are simultaneously summed and if desired corrected by a machine-specific factor, in that the numerical amount of the stroke of the displaceable machine part (8) covered during this summation is compared with the numerical amount of the summed, optionally corrected difference value in that, on a lack of equality between the numerical amount of the stroke covered and the numerical amount of the summed, optionally corrected difference value an error indication is given and in that the checking of the position control circuit takes place cyclically with each renewed sum formation in a cycle dependent on the velocity of the machine part (8).

2. Method according to claim 1, characterized in that the summing of the difference values and the comparison between the numerical amount of the stroke covered and the numerical amount of the summed difference value are effected by a computer.

3. Method according to claim 1, characterized in that the summing of the difference values and the comparison between the numerical amount of the stroke covered and the numerical amount of the summed difference value are effected by a discrete adder (S) and by a discrete comparator (V).

4. Method according to claim 1, characterized in that an error indication is given on a lack of equality outside a predetermined tolerance.

## Revendications

1. Procédé de positionnement de parties, mobiles en translation l'une par rapport à l'autre, de machines à commande numerique, notamment de machines d'usinage, dont la commande numérique agit sur au moins un circuit de régulation de position en boucle fermée, destiné à influencer une unité d'entraînement pour une partie de machine mobile en translation, en fonction de valeurs de consigne de position predéterminées de façon fixe et de valeurs réelles de position pour la partie de machine déterminées par un dispositif de mesure de position, ladite commande détermine les valeurs différentielles entre les valeurs de consigne de position predéterminées de manière variable et les valeurs réelles de position momentanées et émet des tensions analogiques, proportinnelles à ces valeurs différentielles, à un régulateur d'entraînement pour l'unité d'entraînement, caractérisé en ce que pour le contrôle du circuit de regulation de position, ces valeurs différentielles sont en même temps totalisées et corrigées le cas échéant avec un facteur spécifique à la machine, que la valeur numérique du trajet parcouru par la partie de machine (8) mobile en translation pendant cette totalisation est comparée à la valeur numérique de la valeur différentielle totalisée et corrigée le cas échéant, qu'un message d'erreur est émis en cas d'inégalité entre la valeur numérique du trajet parcouru et la valeur numérique de la valeur différentielle totalisée et corrigée le cas échéant et que le contrôle du circuit de régulation de position est effectué de manière cyclique avec totalisation renouvelée à une cadence dépendant de la vitesse de la partie de machine (8).

2. Procédé selon la revendication 1, caractérisé en ce que la totalisation des valeurs différentielles et la comparaison entre la valeur numérique du trajet parcouru et la valeur numérique de la valeur différentielle totalisée sont effectuées par un calculateur.

3. Procédé selon la revendication 1, caractérisé en ce que la totalisation des valeurs différentielles est effectuée par un totalisateur discret (S) et la comparaison entre la valeur numérique du trajet parcouru et la valeur numérique de la valeur différentielle totalisée est effectuée par un comparateur discret (V).

4. Procédé selon la revendication 1, caracérisé en ce qu'un message d'erreur est émis dans le cas d'une inégalité en dehors d'une plage de tolérances pouvant être prédéterminée.

FIG.1

EP 0 082 940 B1

FIG.2